# FASCICULE DE BREVET EUROPEEN

(11) **EP 2 828 198 B1**
(45) Date de publication et mention de la délivrance du brevet: **27.04.2016**
(21) Numéro de dépôt: 13710877.5
(22) Date de dépôt: 21.03.2013
(51) Int. Cl.: C01B 33/193

(54) **PROCÉDÉ DE PRÉPARATION DE SILICE PRÉCIPITÉE COMPRENANT UNE ETAPE DE DELITAGE A CHAUD**
VERFAHREN ZUR HERSTELLUNG VON FÄLLUNGSKIESELSÄURE MIT EINEM HOCHTEMPERATURVERFLÜSSIGUNGSSCHRITT
METHOD FOR PREPARING PRECIPITATED SILICA COMPRISING A STEP OF HIGH TEMPERATURE SPALLING

(30) Priorité: 22.03.2012 FR 1252589
(43) Date de publication de la demande: 28.01.2015
(73) Titulaire: RHODIA OPERATIONS, 93306 Aubervilliers (FR)
(72) Inventeur: FOURNIER, Elise, F-69001 Lyon (FR); NEVEU, Sylvaine, F-75005 Paris (FR); RACINOUX, Joël, F-69270 Rochetaillee Sur Saone (FR)
(74) Mandataire: Delenne, Marc
(86) Numéro de dépôt international: PCT/EP2013/055973
(87) Numéro de publication internationale: WO 2013/139932

(56) Documents cités:
- EP-A1- 0 754 650
- WO-A1-96/01787

## Description

La présente invention concerne un procédé amélioré de préparation de silice précipitée.

Il est connu d'employer des silices précipitées comme support de catalyseur, comme absorbant de matières actives (en particulier supports de liquides, par exemple utilisés dans l'alimentation, tels que les vitamines (vitamine E notamment), le chlorure de choline), comme agent viscosant, texturant ou anti-mottant, comme élément pour séparateurs de batteries, comme additif pour dentifrice, pour papier.

On peut également employer des silices précipitées comme charge renforçante dans des matrices silicones (par exemple pour l'enrobage des câbles électriques) ou dans des compositions à base de polymère(s), naturel(s) ou synthétique(s), en particulier d'élastomère(s), notamment diéniques, par exemple pour les semelles de chaussures, les revêtements de sols, les barrières aux gaz, les matériaux ignifugeants et également les pièces techniques telles que les galets de téléphériques, les joints d'appareils électroménagers, les joints de conduite de liquides ou de gaz, les joints de système de freinage, les gaines, les câbles et les courroies de transmissions.

La silice précipitée est notamment utilisée depuis longtemps comme charge blanche renforçante dans les élastomères, et en particulier dans les pneumatiques.

La préparation de silice précipitée s'effectue généralement par réaction de précipitation entre un silicate, en particulier un silicate de métal alcalin, et un agent acidifiant, suivie d'une étape de séparation par filtration pour obtenir un gâteau de filtration et d'une étape de lavage dudit gâteau, puis d'une éventuelle étape de délitage du gâteau de filtration et d'une étape de séchage, par exemple par atomisation, dudit gâteau.

Dans le cadre de certains procédés de préparation de silice précipitée, la viscosité des gâteaux de filtration obtenus au cours du procédé est très élevée et l'étape de délitage ne peut se faire qu'avec une énergie mécanique importante. L'ajout d'eau peut être une solution car elle contribue à réduire la viscosité. Toutefois, l'ajout d'eau s'avère néfaste à la productivité du séchage, dans la mesure où pour sécher la même quantité de silice, il faut éliminer plus d'eau.

Par ailleurs, l'apport de l'énergie mécanique dans l'étape de délitage, peut entraîner une réduction de la granulométrie de la silice trop importante, qui peut conduire à une silice trop cohésive après séchage, qui peut alors ne pas être apte à être dispersée dans des matrices élastomériques par exemple.

Dans le cadre des procédés de l'état de la technique, la consommation d'énergie est élevée. Le séchage est la source principale de consommation d'énergie et représente ainsi un coût assez élevé.

Il existe donc un besoin en termes de réduction de consommation énergétique, et donc par exemple dans le cadre des opérations de séchage.

Ainsi, un des buts de la présente invention consiste à fournir un procédé de préparation de silice précipitée permettant de limiter les dépenses énergétiques notamment en termes de séchage.

L'un des buts de l'invention est notamment de fournir une alternative aux procédés de préparation connus de silice précipitée, qui soit économique et simple de mise en oeuvre.

Un autre but de la présente invention consiste de préférence à fournir un procédé permettant d'augmenter la productivité du procédé de préparation de silice précipitée, en particulier au niveau de l'étape de séchage, de manière avantageuse tout en ne dégradant pas, les propriétés de la silice précipitée obtenue, notamment sa dispersibilité, en particulier dans les élastomères.

La présente invention a également pour but de préparer, au cours du procédé, des suspensions de silice ayant des teneurs en matière sèche élevées tout en conservant une qualité de suspension équivalente sans nécessiter d'énergie mécanique supplémentaire.

La présente invention concerne donc un procédé de préparation de silice précipitée comprenant la réaction d'un silicate avec un agent acidifiant pour obtenir une suspension de silice précipitée (S1), suivie d'une étape de séparation pour obtenir un gâteau, d'une étape de délitage dudit gâteau pour obtenir une suspension de silice précipitée (S2) et d'une étape de séchage de cette suspension, et dans lequel l'étape de délitage est effectuée à chaud, en l'occurrence à une température comprise entre 50 et 120 °C.

De préférence, l'étape de délitage du procédé selon l'invention est effectuée à une température comprise entre 50 et 100 °C, en particulier entre 60 et 100 °C, notamment entre 70 et 90 °C, par exemple entre 75 et 85 °C. L'étape de délitage peut être réalisée à une température de 80 °C.

Selon l'invention, l'étape de délitage peut être réalisée sous pression.

Selon un mode de réalisation, l'étape de délitage est réalisée à pression atmosphérique.

Typiquement, l'étape de délitage peut être réalisée à une température élevée de 50 à 120 °C, par ajout de vapeur d'eau ou par chauffage.

Selon un mode de réalisation de l'invention, l'étape de délitage peut comprendre l'ajout de vapeur d'eau.

Selon un autre mode de réalisation de l'invention, l'étape de délitage peut comprendre une étape de chauffage. Typiquement, l'étape de chauffage peut être réalisée dans le déliteur (ou enceinte où est effectuée l'étape de délitage).

Selon la présente invention, l'étape de délitage peut comprendre une étape préalable de pré-chauffage du gâteau de filtration, notamment avant chauffage.

En particulier, le gâteau de filtration peut être préchauffé de 1 minute à 10 heures, de préférence de 30 minutes à 5 heures, préférentiellement de 1 à 5 heures, et par exemple pendant environ 3 heures.

De préférence, l'éventuel préchauffage du gâteau de filtration est réalisé à une température identique ou sensiblement identique à la température à laquelle l'étape de délitage sera effectuée.

En particulier, le procédé selon la présente invention comprend donc les étapes suivantes :
- on fait réagir (réaction de précipitation) au moins un silicate avec au moins un agent acidifiant, de manière à obtenir une suspension de silice précipitée (S1),
- on effectue une étape de séparation solide-liquide, plus particulièrement de filtration, pour obtenir un produit solide, désigné également "gâteau de filtration",
- on soumet ledit gâteau de filtration à une opération de délitage à une température telle qu'indiquée ci-dessus, en l'occurrence à une température comprise entre 50 et 120 °C, pour obtenir une suspension de silice précipitée (S2), et
- on sèche, de préférence par atomisation, le produit ainsi obtenu.

L'opération de délitage est une opération de fluidification ou liquéfaction, dans laquelle le gâteau de filtration est rendu liquide, la silice précipitée se retrouvant en suspension. En général, cette opération permet notamment d'abaisser la viscosité de la suspension à sécher ultérieurement. Cette opération peut être ainsi réalisée en soumettant le gâteau de filtration à une action chimique, par exemple par addition d'un composé de l'aluminium tel que de l'aluminate de sodium, et/ou d'acide, avantageusement couplée à une action mécanique qui induit habituellement une réduction granulométrique de la silice en suspension (par exemple par passage dans un bac agité en continu ou dans un broyeur de type colloïdal). La suspension (en particulier aqueuse) obtenue après délitage présente une viscosité relativement faible.

En général, dans le cadre du procédé de l'invention, le produit (gâteau de filtration) soumis à l'étape de délitage peut présenter un taux de matières sèches (ou siccité ou teneur en extrait sec) d'au moins 10 % en poids (en particulier compris entre 10 et 40 % en poids, par exemple compris entre 10 et 35 % en poids), de préférence d'au moins 15 % en poids (en particulier compris entre 15 et 40 % en poids, par exemple compris entre 15 et 35 % en poids), et de manière encore plus préférée d'au moins 18 % en poids, en particulier compris entre 18 et 40 % en poids, notamment compris entre 20 et 35 % en poids, par exemple entre 20 et 30 % en poids. En particulier, le produit (gâteau de filtration) traité par l'étape de délitage du procédé selon l'invention peut présenter un taux de matières sèches d'au moins 25 % en poids, notamment compris entre 25 et 35 % en poids, par exemple compris entre 25 et 30 % en poids.

Dans le cadre du procédé de l'invention, la durée de l'étape de délitage (durée de l'éventuelle étape de pré-chauffage non-incluse) peut être comprise entre 5 et 120 minutes, de préférence entre 15 et 60 minutes, en particulier entre 15 et 40 minutes. Cette durée peut être notamment comprise entre15 et 35 minutes, par exemple entre 20 et 35 minutes.

La suspension de silice précipitée (S2) obtenue à l'issue de l'étape de délitage présente généralement un taux de matières sèches d'au moins 10 % en poids (en particulier compris entre 10 et 40 % en poids, par exemple compris entre 10 et 35 % en poids), de préférence d'au moins 15 % en poids (en particulier compris entre 15 et 40 % en poids, par exemple compris entre 15 et 35 % en poids), et de manière encore plus préférée d'au moins 18 % en poids, en particulier compris entre 18 et 40 % en poids, notamment compris entre 20 et 35 % en poids, par exemple entre 20 et 30 % en poids. En particulier, la suspension (S2) obtenue à l'issue de l'étape de délitage du procédé selon l'invention peut présenter un taux de matières sèches d'au moins 25 % en poids, notamment compris entre 25 et 35 % en poids, par exemple compris entre 25 et 30 % en poids.

Selon un mode de réalisation avantageux du procédé de l'invention, le produit obtenu à l'issue de l'étape de délitage présente un taux de matières sèches compris de 15% à 30% en poids, et de préférence compris de 18% à 29% en poids, et préférentiellement de 26% à 29% en poids.

En général, dans le procédé de l'invention, le taux de matières sèches du gâteau ou de la suspension de silice avant et après délitage peut être identique ou peut être légèrement différent. On a constaté que, de manière avantageuse, l'étape de délitage réalisée à une température élevée, à savoir compris entre 50 et 120 °C, permet d'éviter de devoir ajouter de l'eau, en réduisant l'énergie mécanique à fournir pour obtenir une viscosité identique.

De même, on a constaté que l'étape de délitage réalisée à une température élevée peut permettre de pouvoir travailler avec des taux de matières sèches plutôt élevés, et même plus élevés que dans une étape de délitage réalisée à température ambiante. L'étape de séchage s'en trouve facilitée, dans la mesure où il y a moins d'eau à éliminer. On a constaté ainsi que le procédé selon l'invention permet d'améliorer la productivité, notamment de l'étape de séchage.

En outre, on a constaté que, de manière avantageuse, l'énergie mécanique nécessaire dans l'étape de délitage à température élevée du procédé de l'invention est préférentiellement inférieure à celle mise en oeuvre dans une étape de délitage à température ambiante, pour un même extrait sec élevé du gâteau. En conséquence, la suspension de silice précipitée (S2) obtenue s'avère moins broyée, et donc la qualité de la silice précipitée obtenue n'est pas sensiblement modifiée.

Le procédé selon l'invention concerne un procédé de synthèse de silice de précipitation, c'est-à-dire que l'on met d'abord en oeuvre une étape de précipitation dans laquelle on fait réagir au moins un agent acidifiant avec au moins un silicate, sans limitation à un type particulier de silice de précipitation.

Le procédé selon l'invention peut être mis en oeuvre notamment pour la préparation de silices précipitées telles qu'obtenues selon les procédés décrits par exemple dans les demandes EP 0 520 862, EP 0 670 813, EP 0 670 814, EP 0 917 519, WO 95/09127, WO 95/09128, WO 96/01787, WO 98/54090, WO 03/016215, WO 2009/112458 ou WO 2012/010712.

La réaction de précipitation par réaction d'un silicate avec un agent acidifiant peut s'effectuer dans le procédé selon la présente invention selon tout mode de préparation, notamment par addition d'un agent acidifiant sur un pied de cuve de silicate, ou bien par addition simultanée, totale ou partielle, d'agent acidifiant et de silicate sur un pied de cuve d'eau, ou de silicate ou d'agent acidifiant.

Le choix de l'agent acidifiant et du silicate se fait d'une manière bien connue en soi. On utilise généralement comme agent acidifiant un acide minéral fort tel que l'acide sulfurique, l'acide nitrique ou l'acide chlorhydrique ou encore un acide organique tel que l'acide acétique, l'acide formique, l'acide carbonique.

On obtient, à l'issue de l'étape de précipitation, une suspension (ou bouillie) S1 de silice précipitée, à laquelle on peut éventuellement ajouter différents additifs, qui est ensuite séparée.

Selon un mode de réalisation particulier de l'invention, l'étape de séparation mentionnée ci-dessus consiste en une étape de séparation solide-liquide. De préférence, elle consiste en une étape de filtration, à l'issue de laquelle on obtient un gâteau de filtration, le cas échéant suivie d'une étape de lavage dudit gâteau.

La filtration peut se faire selon toute méthode convenable, par exemple à l'aide d'un filtre-presse ou un filtre à bande ou un filtre rotatif sous vide.

Le produit (gâteau) obtenu est ensuite soumis à l'étape de délitage telle que décrite ci-dessus.

Selon un mode de réalisation, le procédé de l'invention peut éventuellement comprendre une étape d'émottage entre l'étape de séparation et l'étape de délitage.

Cette étape facultative consiste à émietter le gâteau issu de l'étape de séparation et permet de diminuer la granulométrie du gâteau de filtration. Par exemple, cette étape peut être mise en oeuvre avec un Nibleur de Gericke, dans lequel le gâteau est forcé au travers d'une grille de diamètre inférieur à 20 mm, de préférence de taille comprise entre 2 et 14 mm. Cette étape d'émottage peut aussi être effectuée par des outils de Wyssmont tels que le *"Rotocage Lumpbreaker",* le *"double Rotocage Lumpbreaker*" ou le *"Triskelion Lumpbreaker*".

La suspension de silice précipitée S2 obtenue à l'issue de l'étape de délitage est ensuite séchée.

Ce séchage peut se faire selon tout moyen connu en soi.

Selon un mode de réalisation préféré du procédé de l'invention, le séchage est effectué par atomisation.

A cet effet, on peut utiliser tout type d'atomiseur convenable, notamment un atomiseur à turbines, de préférence un atomiseur à buses, à pression liquide ou à deux fluides.

Lorsque le séchage est effectué au moyen d'un atomiseur à buses, la silice précipitée susceptible d'être alors obtenue par le procédé selon l'invention se présente avantageusement sous forme de billes sensiblement sphériques (microperles), de préférence d'une taille moyenne d'au moins 80 µm.

A l'issue de ce séchage, on peut éventuellement procéder à une étape de broyage (en particulier à sec) sur le produit récupéré ; la silice précipitée alors obtenue se présente généralement sous forme d'une poudre, de préférence de taille moyenne comprise entre 5 et 70 µm.

Lorsque le séchage est effectué au moyen d'un atomiseur à turbines, la silice précipitée susceptible d'être alors obtenue peut se présenter sous la forme d'une poudre, par exemple de taille moyenne comprise entre 5 et 70 µm.

De même, le produit séché, notamment lorsqu'il se présente sous forme de poudre, ou broyé peut éventuellement être soumis à une étape d'agglomération, qui consiste par exemple en une compression directe, une granulation voie humide (c'est-à-dire avec utilisation d'un liant tel que eau, suspension de silice...), une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice précipitée susceptible d'être obtenue à l'issue de cette étape d'agglomération se présente généralement sous forme de granulés, en particulier de taille d'au moins 1 mm, en particulier comprise entre 1 et 10 mm, notamment selon l'axe de leur plus grande dimension.

Les exemples suivants illustrent l'invention sans toutefois en limiter la portée.

### Exemples

### Matières premières utilisées

- gâteau de silice précipitée Z1165MP, ayant un extrait sec de 27 % en poids, obtenu à l'étape de filtration,
- solution d'aluminate de sodium, présentant une concentration exprimée en Al₂O₃ de 23 % et un rapport pondéral Na₂O/Al₂O₃ de 0,8,
- acide sulfurique de concentration égale à 80 g/L.

### Critères de contrôle

- Granulométrie par sédimentation réalisée sur l'appareil Sedigraph 55100 (Micromeretics) à partir du pourcentage de particules inférieures à 0,5 µm. La suspension analysée par cette technique est diluée à 4,6 % en poids dans de l'eau épurée et elle est agitée faiblement. La suspension obtenue est ensuite tamisée à l'aide d'un tamis à 250 µm et l'analyse est réalisée en prenant une gamme de mesure entre 0,3 et 85 µm.
- Granulométrie par diffraction laser réalisée sur un dispositif Mastersizer 2000 (Malvern), en diluant dans la zone de mesure avec de l'eau épurée, l'opturation du faisceau étant comprise entre 8 et 13 %.
- Energie dissipée au délitage par l'agitation sur granulateur Zanchetta.

L'étape de délitage est réalisée sur le granulateur Zanchetta (Granulateur sécheur « high shear tri-pale » avec mesure de couple électrique).

Chaque gâteau délité sortant du granulateur Zanchetta est tamisé à 800 µm, puis contrôlé en extrait sec, en granulométrie laser Malvern et granulométrie Sedigraph.

### Mode opératoire de délitage

- délitage à 1000 tours/min, cuve régulée en température (à 25 °C ou 80 °C)
- à t = 0 : mise en contact de l'aluminate avec 1 kg de gâteau (le gâteau étant préalablement émietté sur un tamis de 4 mm) préchauffé pendant 3 heures à 80 °C en sachet hermétique (dans le cas où la cuve est ensuite régulée à 80 °C), conduisant à un rapport Al/SiO₂ de 0,3 % en poids,
- à t = 7 min : ajustement du pH avec ajout d'acide sulfurique pendant 1 minute,
- fin du délitage à 30 minutes : le produit est ensuite passé sur un tamis de 800 µm.

**Tableau 1**

| Essai | Température (°C) | ES* (%) | Energie mécanique à 200 s (J) | Temps au pic d'intensité (s) | Energie mécanique après 30 minutes (J) |
|---|---|---|---|---|---|
| 1 | 25 | 28.4 | 34300 | 44 | 107000 |
| 2 | 25 | 27,4 | 30600 | 32 | 112700 |
| 3 | 80 | 28,6 | 19450 | 19 | 99000 |
| 4 | 80 | 28,8 | 17300 | 19 | 103700 |

| | | | | | |
|---|---|---|---|---|---|
| *ES : extrait sec | | | | | |

Les essais 1 et 2 sont des essais comparatifs correspondant à une étape de délitage réalisée à température ambiante (25 °C), avec des extraits secs élevés.

Il est montré que les essais 3 et 4, conformes à l'invention, dans lesquels l'étape de délitage est réalisée à 80 °C, requièrent moins d'énergie mécanique que dans les essais 1 et 2 réalisés à température ambiante, pour des niveaux d'extraits secs élevés comparables. En effet, les énergies dissipées à 200 s sont de 30600 et 34300 J dans les essais 1 et 2, contre seulement 17300 et 19450 J dans les essais 3 et 4 conformes à l'invention.

De même, dans les essais 3 et 4 selon l'invention, l'énergie dissipée cumulée sur l'étape de délitage se trouve notablement diminuée (énergie mécanique après 30 minutes).

De plus, le temps au pic d'intensité, qui correspond au passage de l'état solide du gâteau à l'état liquide, est plus long dans les essais comparatifs 1 et 2 que dans les essais 3 et 4 selon l'invention. Ainsi, l'étape de délitage dans les conditions de l'invention nécessite moins d'énergie pour passer à l'état liquide que lors d'une étape de délitage réalisée à température ambiante, pour des extraits secs élevés.

**Tableau 2**

| Essai | Température (°C) | ES (%) | Granulométrie laser | Sedigraph | | |
|---|---|---|---|---|---|---|
| | | | d50 (µm) | % d< 0,5 µm | % d < 1 µm | % d < 1,5 µm |
| 1 | 25 | 28,4 | 11,8 | 79,9 | 88,0 | 90,9 |
| 2 | 25 | 27,3 | 14,2 | 79,4 | 85,7 | 88,6 |
| 3 | 80 | 28,6 | 20,3 | 63,6 | 69,2 | 72,5 |
| 4 | 80 | 28,8 | 18,8 | 64,2 | 73,2 | 77,0 |

On constate que le taux de fines (% de particules ayant un diamètre (d) inférieur à 0,5 µm) est inférieur dans les essais 3 et 4 dans lesquels l'étape de délitage est réalisée à 80 °C, par rapport au taux de fines obtenu dans les essais 1 et 2 dans lesquels l'étape de délitage est réalisée à 25 °C. Les produits ont été moins broyés dans l'étape de délitage à 80 °C que dans l'étape de délitage à 25 °C, pour des taux d'extrait sec comparables.

## Revendications

1. Procédé de préparation de silice précipitée comprenant la réaction d'un silicate avec un agent acidifiant pour obtenir une suspension de silice précipitée (S1), suivie d'une étape de séparation pour obtenir un gâteau, d'une étape de délitage dudit gâteau pour obtenir une suspension de silice précipitée (S2) et d'une étape de séchage de cette suspension, procédé dans lequel l'étape de délitage est effectuée à une température comprise entre 50 et 120 °C.

2. Procédé selon la revendication 1, dans lequel l'étape de délitage est effectuée à une température comprise entre 50 et 100 °C, de préférence entre 60 et 100 °C, en particulier 70 et 90 °C, notamment entre 75 et 85 °C.

3. Procédé selon l'une des revendications 1 et 2, dans lequel l'étape de délitage comprend l'ajout de vapeur d'eau.

4. Procédé selon l'une des revendications 1 à 3, dans lequel l'étape de délitage comprend une étape de chauffage, éventuellement précédée d'une étape de pré-chauffage du gâteau.

5. Procédé selon l'une des revendications 1 à 4, dans lequel la durée de l'étape de délitage est comprise entre 5 et 120 minutes, de préférence entre 15 et 60 minutes, en particulier entre 15 et 40 minutes.

6. Procédé selon l'une des revendications 1 à 5, dans lequel le gâteau de filtration soumis à l'étape de délitage présente un taux de matières sèches d'au moins 10 % en poids, de préférence compris entre 10% et 40 % en poids, en particulier compris entre 15 et 35 % en poids, notamment compris entre 25 et 35 % en poids.

7. Procédé selon l'une des revendications 1 à 6, dans lequel la suspension de silice précipitée (S2) issue de l'étape de délitage présente un taux de matières sèches d'au moins 10 % en poids, de préférence compris entre 10% et 40 % en poids, en particulier compris entre 15 et 35 % en poids, notamment compris entre 25 et 35 % en poids.

8. Procédé selon l'une des revendications 1 à 7, dans lequel l'étape de séparation consiste en une étape de filtration, le cas échéant suivie d'une étape de lavage.

9. Procédé selon la revendication 8 dans lequel l'étape de filtration est réalisée au moyen d'un filtre rotatif sous vide ou d'un filtre-presse.

10. Procédé selon l'une des revendications 1 à 9, dans lequel l'étape de séchage est effectuée par atomisation, en particulier au moyen d'un atomiseur à buses.

11. Procédé selon l'une des revendications 1 à 10, dans lequel le produit issu de l'étape de séchage est soumis à une étape de broyage.

12. Procédé selon l'une des revendications 1 à 11, dans lequel le produit issu de l'étape de séchage ou issu de l'éventuelle étape de broyage est soumis à une étape d'agglomération.

## Patentansprüche

1. Verfahren zur Herstellung von Fällungskieselsäure, umfassend die Umsetzung eines Silikats mit einem Ansäuerungsmittel zum Erhalt einer Suspension von Fällungskieselsäure (S1), gefolgt von einem Schritt der Trennung zum Erhalt eines Kuchens, einem Schritt der Fragmentierung des Kuchens zum Erhalt einer Suspension von Fällungskieselsäure (S2) und einem Schritt der Trocknung dieser Suspension, wobei der Fragmentierungsschritt bei dem Verfahren bei einer Temperatur zwischen 50 und 120°C durchgeführt wird.

2. Verfahren nach Anspruch 1, bei dem der Fragmentierungsschritt bei einer Temperatur zwischen 50 und 100°C, vorzugsweise zwischen 60 und 100°C, insbesondere zwischen 70 und 90°C, speziell zwischen 75 und 85°C, durchgeführt wird.

3. Verfahren nach einem der Ansprüche 1 bis 2, bei dem der Fragmentierungsschritt die Hinzufügung von Wasserdampf umfasst.

4. Verfahren nach einem der Ansprüche 1 bis 3, bei dem der Fragmentierungsschritt einen Schritt des Erhitzens umfasst, dem gegebenenfalls ein Schritt des Vorerhitzens des Kuchens vorgeschaltet wird.

5. Verfahren nach einem der Ansprüche 1 bis 4, bei dem die Dauer des Fragmentierungsschritts zwischen 5 und 120 Minuten, vorzugsweise zwischen 15 und 60 Minuten, insbesondere zwischen 15 und 40 Minuten, liegt.

6. Verfahren nach einem der Ansprüche 1 bis 5, bei dem der dem Fragmentierungsschritt unterworfene Filterkuchen einen Feststoffgehalt von mindestens 10 Gew.-%, vorzugsweise zwischen 10 und 40 Gew.-%, insbesondere zwischen 15 und 35 Gew.-%, speziell zwischen 25 und 35 Gew.-%, aufweist.

7. Verfahren nach einem der Ansprüche 1 bis 6, bei dem die Suspension von Fällungskieselsäure (S2) aus dem Fragmentierungsschritt einen Feststoffgehalt von mindestens 10 Gew.-%, vorzugsweise zwischen 10 und 40 Gew.-%, insbesondere zwischen 15 und 35 Gew.-%, speziell zwischen 25 und 35 Gew.-%, aufweist.

8. Verfahren nach einem der Ansprüche 1 bis 7, bei dem der Trennungsschritt aus einem Filtrationsschritt, gegebenenfalls gefolgt von einem Waschschritt, besteht.

9. Verfahren nach Anspruch 8, bei dem der Filtrationsschritt mit Hilfe eines Vakuum-Drehfilters oder einer Filterpresse durchgeführt wird.

10. Verfahren nach einem der Ansprüche 1 bis 9, bei dem der Trocknungsschritt durch Zerstäubung, insbesondere mit einem Düserizerstäuber, durchgeführt wird.

11. Verfahren nach einem der Ansprüche 1 bis 10, bei dem das Produkt aus dem Trocknungsschritt einem Zerkleinerungsschritt unterworfen wird.

12. Verfahren nach einem der Ansprüche 1 bis 11, bei dem das Produkt aus dem Trocknungsschritt bzw. aus dem fakultativen Zerkleinerungsschritt einem Agglomerationsschritt unterworfen wird.

## Claims

1. A process for the preparation of precipitated silica comprising the reaction of a silicate with an acidifying agent in order to obtain a suspension of precipitated silica (S1), followed by a separation step in order to obtain a cake, by a step of disintegrating said cake in order to obtain a suspension of precipitated silica (S2), and by a step of drying this suspension, in which process the disintegrating step is carried out at a temperature of between 50 and 120°C.

2. The process as claimed in claim 1, in which the disintegrating step is carried out at a temperature of between 50 and 100°C, preferably between 60 and 100°C, in particular between 70 and 90°C, especially between 75 and 85°C.

3. The process as claimed in either of claims 1 and 2, in which the disintegrating step comprises the addition of steam.

4. The process as claimed in one of claims 1 to 3, in which the disintegrating step comprises a heating step, optionally preceded by a step of preheating the cake.

5. The process as claimed in one of claims 1 to 4, in which the duration of the disintegrating step is between 5 and 120 minutes, preferably between 15 and 60 minutes, in particular between 15 and 40 minutes.

6. The process as claimed in one of claims 1 to 5, in which the filtration cake subjected to the disintegrating step exhibits a solids content of at least 10% by weight, preferably of between 10% and 40% by weight, in particular of between 15% and 35% by weight, especially of between 25% and 35% by weight.

7. The process as claimed in one of claims 1 to 6, in which the suspension of precipitated silica (S2) resulting from the disintegrating step exhibits a solids content of at least 10% by weight, preferably of between 10% and 40% by weight, in particular of between 15% and 35% by weight, especially of between 25% and 35% by weight.

8. The process as claimed in one of claims 1 to 7, in which the separation step consists of a filtration step, if appropriate followed by a washing step.

9. The process as claimed in claim 8, in which the filtration step is carried out using a rotary vacuum filter or a filter press.

10. The process as claimed in one of claims 1 to 9, in which the drying step is carried out by atomization, in particular using a nozzle atomizer.

11. The process as claimed in one of claims 1 to 10, in which the product resulting from the drying step is subjected to a milling step.

12. The process as claimed in one of claims 1 to 11, in which the product resulting from the drying step or resulting from the optional milling step is subjected to an agglomeration step.
